# EUROPEAN PATENT APPLICATION

(11) **EP 4 312 381 A2**
(43) Date of publication of application: **31.01.2024**
(21) Application number: 23177435.7
(22) Date of filing: 06.06.2023
(51) Int. Cl.: H04B 1/10

(54) **CAPABILITY INDICATION UPDATE**

(30) Priority: 05.07.2022 US 202263358297 P
(71) Applicant: Nokia Technologies Oy, 02610 Espoo (FI)
(72) Inventor: RYSGAARD, Bent Henneberg, Aalborg (DK); BLÜCHER BRINK, Stig, Aalborg (DK); DHERE, Amol, Gistrup (DK); NIELSEN, Kim, Storvorde (DK)
(74) Representative: Nokia EPO representatives

(57) **Abstract**

There is provided a method, comprising: receiving from a network an indication of a channel assignment; determining adjacent channel interface within a reception bandwidth when applying a first receiver configuration for reception on the channel assignment; determining whether the adjacent channel interference meets a predetermined criterion with respect to a predetermined threshold; based on determining that the adjacent channel interference meets the predetermined criterion, switching from applying the first receiver configuration to applying a second receiver configuration for reception on the channel assignment, and transmitting to the network a message indicating a capability update of the apparatus with respect to at least one of frequency bands or frequency band combinations; or based on determining that the adjacent channel interference does not meet the predetermined criterion, continue applying the first receiver configuration for reception on the channel assignment.

## Description

### TECHNICAL FIELD

Various example embodiments relate generally to indicating updated capabilities of a user equipment.

### BACKGROUND

Indicating carrier aggregation (CA) and dual connectivity (DC) capabilities of a user equipment (UE) towards a wireless radio communication network is an important feature. Based on such indications, the network can configure the UE with CA or DC which may improve the communication throughput. These capabilities are also of importance for radio frequency (RF) frontend and digital baseband of the UE. The capability indication may provide the network supported band combinations of the UE. As the technology evolves, the number of band combinations are rising continuously which increases the complexity of the UE RF frontend design. This may be because operators challenge UE manufacturers to include frontend modules support different kinds of band combinations.

### BRIEF DESCRIPTION

According to some aspects, there is provided the subject matter of the independent claims. Some further aspects are defined in the dependent claims.

### LIST OF THE DRAWINGS

In the following, the invention will be described in greater detail with reference to the embodiments and the accompanying drawings, in which
Figure 1 presents a network, according to an embodiment;
Figure 2 shows an example of UE capability exchange, according to an embodiment;
Figure 3 shows an example of RRC setup, according to an embodiment;
Figure 4 illustrates example implementation of irregular channel bandwidths, according to some embodiments;
Figure 5 illustrate a receiver hardware, according to an embodiment;
Figure 6 shows a method, according to an embodiment;
Figures 7, 8 and 9 illustrate different channel assignments and how a receiver can receive those, according to some embodiments;
Figures 10, 11, 12, and 13 show methods, according to some embodiments;
Figures 14 and 15 show signaling flow diagrams, according to some embodiments; and
Figures 16 and 17 illustrate apparatuses, according to some embodiments.

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "at least one of A or B", "at least one of A and B", "A and/or B" means (A), (B), or (A and B). For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term `eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G may require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloud-let, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Soft-ware-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine soft-ware (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

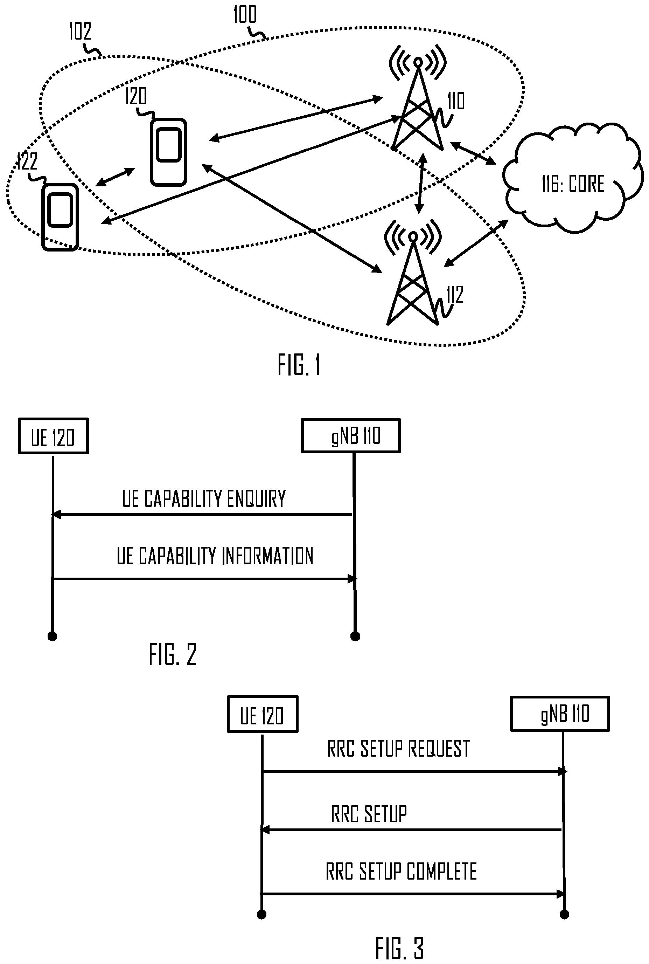

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface Xw may be provided between access points. An interface between an eLTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

A UE (such as the UE 120) may indicate its supported bands and/or band combinations to the network. This may happen when the UE 120 is registering to a communication network via a capability signalling. Figure 2 shows an example of such signalling to the network. In an embodiment, the UE may send the capability information without a preceding enquiry.

The capabilities reflect the options to configure radio and digital baseband paths in the UE 120. When the network allocates connected mode resources to the UE 120, they may be configured in one of the following RRC messages: RRC setup or RRC reconfiguration. Further, when allocating connected mode resources to the UE 120, the network may do this within the band combination capabilities reported by the UE. The RRC setup procedure is outlined in Figure 3. In an embodiment, the network may send the RRC setup without a preceding request.

There are predefined regular bandwidths available for allocation to the UE. The regular bandwidths (BW) may comprise e.g. 5, 10, 15,20,100 MHz, to mention only a few example BWs. These may be called a predetermined set of bandwidths supported by the UE 120. The regular bandwidths are those which match the reception bandwidth of channel filters at the UE 120.

However, an irregular BW is discussed in 3GPP Release 17 as part of the study on 'Efficient utilization of licensed spectrum that is not aligned with existing NR channel bandwidth' to provide further bandwidth flexibility in 5G. These new BW configurations comprise e.g. 6, 7, 11, 12, 13 MHz, for example. In general, a set of irregular bandwidths comprises bandwidths that are not among a set of predetermined (regular) bandwidths. That is, an irregular bandwidth is a bandwidth having a different width than any of a predetermined set of regular bandwidths supported by the UE 120. The irregular bandwidth may be supported from the network as a variant of carrier aggregation (e.g. two component carriers forming one irregular bandwidth), or it may produce a spectrum that the UE cannot filter sufficiently.

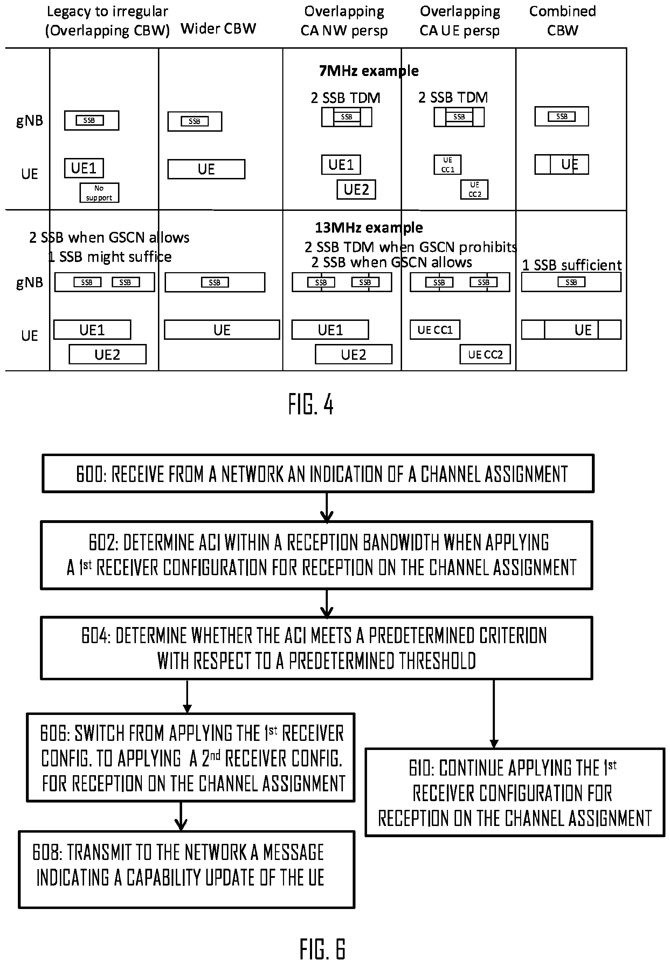

There are different approaches for handling an irregular bandwidth, which are captured in Figure 4. As an example, the network has two ways to construct an irregular bandwidth, which is either through a combined- or wider channel bandwidth, or through the use of overlapping carrier aggregation.

Looking at the 7MHz example the first column shows how legacy UEs may support the new feature of irregular bandwidth. The UE would most likely only support the configuration of the first/lower section of the spectrum leaving no support to the upper spectrum, which means there's no benefit to the UEs of the new feature.

The second column shows the option of the UEs to support the irregular bandwidth through the next wider regular channel bandwidth e.g., 10MHz for 6 and 7MHz and 15MHz for 11,12 and 13MHz. The UE in this option may suffer from degraded sensitivity using a wider channel bandwidth filter, because it may not produce attenuation to the adjacent channel.

The third column shows how the gNB may utilize the irregular bandwidth through carrier aggregation to two UEs. This way the gNB utilize the entire spectrum but may not be of any UE benefit.

If the UEs could support overlapping CA, as indicated in the fourth column, the UE might treat the overlapping CA as independent component carriers. This would be the same as done in non-contiguous intra-band CA, however it requires that the UE supports non-contiguous CA at low bands with a local oscillator (LO) distance that is less than usually configured, and that the UE has ways to treat the overlapping segments or splitting the CCs at irregular bandwidth parts (BWP).

The last column shows how a UE may treat the irregular bandwidth without suffering from the adjacent channel. It supports the irregular bandwidth as one spectrum and not CA and it may have channel filtration that supports the irregular spectrum. This method does, however, require a more advanced receiver design than typically implemented in low bands.

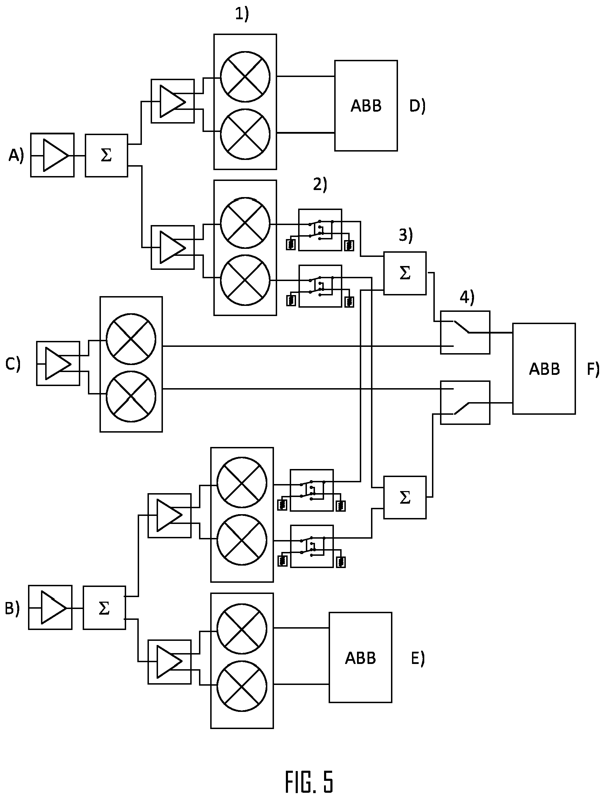

Therefore, to at least partially overcome the problems with the above methods, it is proposed to dynamically switch between a receiver configuration using one receive (Rx) path and a receive configuration using two (or more) Rx paths, for receiving a particular component carrier or an irregular channel bandwidth. That is, if the radio and baseband architecture of the UE allows a more flexible utilization of radio and baseband resources, there are options to increase the capabilities depending on the actual configuration. One example receiver architecture capable of such dynamic switching is shown in Figure 5.

This architecture of Figure 5 allows the usage of specific irregular bandwidths in such a way that there are still resources left to maximize the usage of CA band combinations. That means the architecture allows the choice to receive the irregular bandwidth through a single receive chain (A-D, C-F or B-E) as would be done with a regular channel bandwidth, or with two or more receive chains (e.g. by using [A-D + A-F] or [B-F + B-E], for example, in which case the UE's capability to support different band combinations may be compromised, as two receive chains are used to receive one channel assignment). It is noted that C in the Figure is limited to receive an irregular continuous bandwidth (CBW) through the use of a next wider CBW, whereas A and B allows the signal reception to be split (by use of two ABBs).

As shown in Figure 5, an Rx path is a chain of analogue components in the transceiver comprising of, among others, down-conversion mixers and analogue baseband (ABBs). The Rx path continues into the digital baseband (DBB) comprising of analogue to digital converters (ADCs,) digital front ends (DFEs) and baseband logic for demodulation. An ABB has a configurable analogue low pass channel filter whose bandwidth can be configured typically with a resolution of 5MHz. In a practical implementation the frequency response characteristics of the ABB is not ideal "brickwall"-like and it allows some amount of adjacent channel interference (ACI) to pass through. The DFE has digital filters with much steeper roll-off slopes of the passband to stopband attenuation used to remove almost all ACI. The hardware of the Rx chain can be configured to cover certain regular bandwidths for reception.

The dynamic switching between the receive configurations may thus comprise receiving irregular bandwidth or non-continuous intra-band carrier aggregation (CA) using either one ABB/DBB path configured to receive with next wider regular channel bandwidth, or with two or more ABB/DBB paths configured to receive with overlapping next smaller regular channel bandwidths. However, it may not always be advantageous to switch using two or more Rx chains, as this may affect the UE capabilities for receiving data via carrier aggregations. The UE has committed to the supported band combinations when sending the UE capability information, e.g. upon network registration, and typically has no changes to alter this capability configuration, since it matches the hardware (HW) capabilities of the radio architecture, and the availability of receiver chains.

The decision of which Rx configuration to use may depend, at least partially, on knowledge the UE has about the ACI. This knowledge may be measured by the UE on sub-carriers corresponding to adjacent channel, using a wider channel bandwidth configuration which allows some ACI to pass through the fast Fourier transform (FFT) block. The UE is aware that ACI may become a problem for the reception and therefore it may monitor it. Should the adjacent channel interference harm the signal quality when using one receive chain too much, the UE may reconfigure to use two receive chains (e.g., A-D and A-F in Figure 5), in which case the UE would need to alert the network that the UE's capability to support the reported band combinations is reduced by one. Owing to the reconfiguration of HW resources based on ACI measurements, the UE may benefit from adapting the capabilities towards the network. On the other hand, when the ACI falls below a predetermined threshold, the UE may start using only one receive chain for the reception.

Figure 6 depicts an example method. The method may be computer-implemented. The method may be performed by an UE, such as the UE 120.

In step 600, the UE 120 receives from a network (e.g. from access node 120) an indication of a channel assignment. This channel assignment may comprise, in an embodiment, an allocation of an irregular bandwidth. In an embodiment, the channel assignment comprises a configuration of a non-continuous intra-band carrier aggregation.

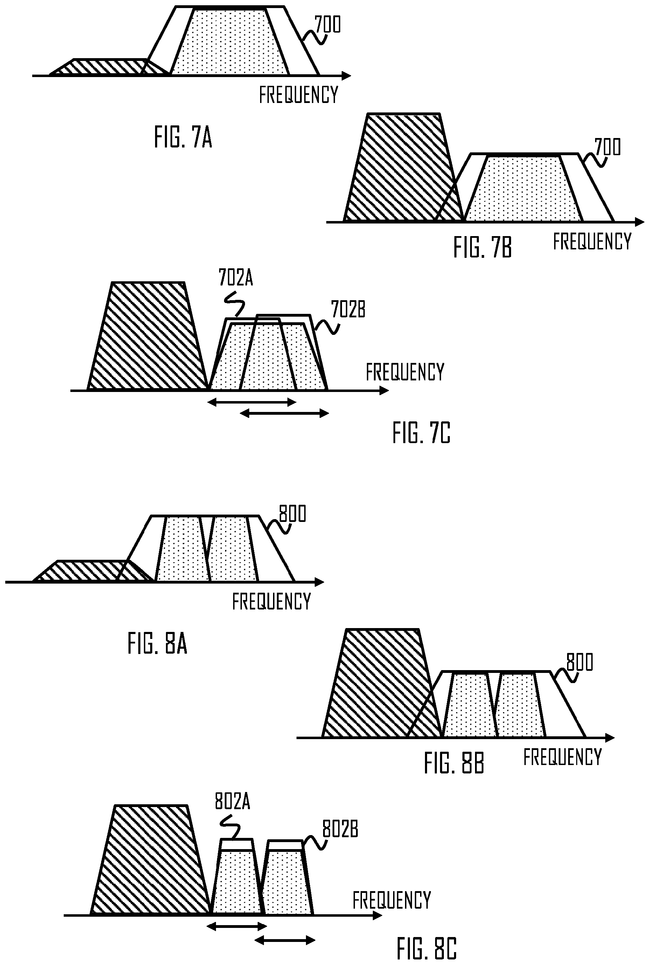

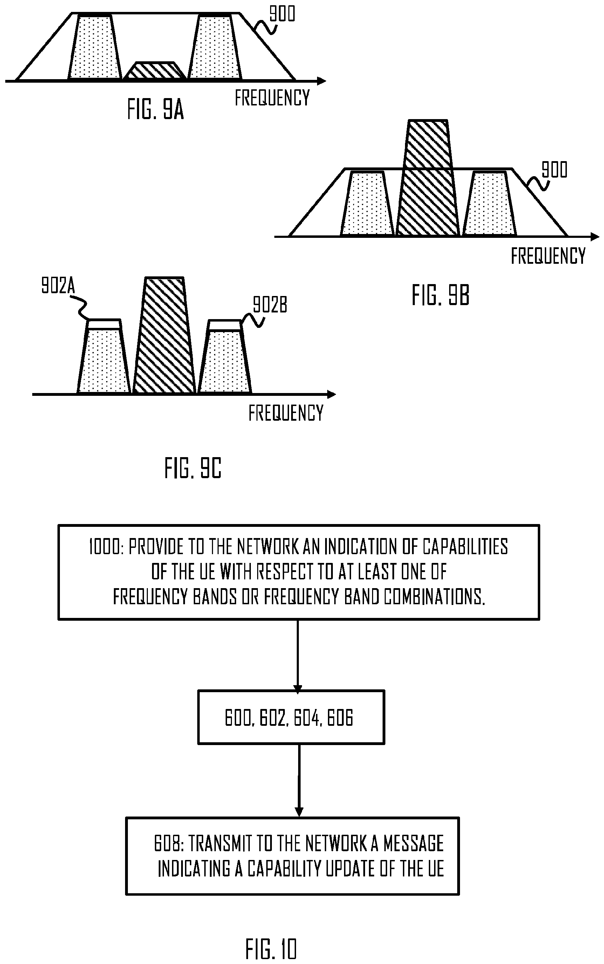

In Figure 7A it is shown that the channel assignment may comprise one irregular bandwidth marked with a dotted block. In Figure 8A it is shown that the channel assignment may comprise two component carriers, marked with dotted blocks, forming an irregular band. In Figure 9A it is shown that the channel assignment may comprise two non-contiguous component carriers, marked with dotted blocks.

In step 602 of Figure 6, the UE determines adjacent channel interface (ACI) within a reception bandwidth when applying a first receiver configuration for reception on the channel assignment, and in step 604 determines whether the ACI meets a predetermined criterion with respect to a predetermined threshold. The ACI value for the threshold may be predetermined based on empirical testing or simulations, for example. In an embodiment, the predetermined criterion is that the ACI exceeds the threshold. In an embodiment, the criterion is that the ACI does not exceed the threshold. ACI may be measured using well-known measurement procedures by the UE.

In an embodiment the ACI related criterion in step 602 is used when the ACI is measured to be a dominant interferer, among other types of interference, such as in-device coexistence (IDC) interference or in-channel interference.

In an embodiment, the first receiver configuration comprises applying one receiver chain for the reception on the channel assignment. In Figure 5, for example, this may be using only one of the RX chains A-D, C-F or B-E.

In step 606 of Figure 6, the UE 120 may, based on determining that the ACI meets the predetermined criterion, switch from applying the first receiver configuration to applying a second receiver configuration for reception on the channel assignment. The second receiver configuration comprises applying at least two receiver chains for the reception on the channel assignment. In Figure 5, this may be e.g. [A-D + A-F] or [B-F + B-E]. However, if the ACI does not meet the predetermined criterion, the UE 120 in step 610 of Figure 6 continues applying the first receiver configuration for reception on the channel assignment.

It is noted that in another embodiment, the first receiver configuration comprises applying at least two receiver chains for the reception on the channel assignment, and the second receiver configuration comprises applying only one receiver chain for the reception on the channel assignment. In this embodiment, for example, the UE may start receiving irregular bandwidth with two Rx chains (i.e. first receiver configuration) and then if ACI is seen to be low enough (i.e. ACI related criteria being met), switch to using only 1 Rx chain (i.e. second receiver configuration).

For example, in Figure 7A it is shown that the UE 120 uses reception bandwidth 700 to receive the irregular band channel assignment, marked with the dotted block. The reception bandwidth 700 may be one of the regular bandwidths, such as the next wider regular bandwidth compared to the assigned irregular bandwidth. For example, if the channel assignment indicates an irregular 7 MHz bandwidth, the UE 120 may use 10 MHz regular bandwidth for reception. The drawback is that the edges of the 10 MHz band may exhibit ACI from the neighbouring bands. In other words, using one receive chain is possible for reception of irregular bandwidth, but having e.g. a 10MHz channel filter for a 7MHz channel BW would expose the signal to 3MHz of unfiltered ACI at the ADC input, which may work out if the ACI is low, but if the ACI is large it will degrade the reception signal.

In Figure 7A, the ACI from the adjacent channel (marked with left likening diagonal lines) is low, for example because there is little or no communication on the adjacent channel causing interference. In this case, it may be assumed that the determined ACI is smaller than the threshold, and the UE 120 may continue using the first receiver configuration of only one Rx chain for the reception.

In Figure 7B, it is assumed that there is communication on the adjacent channel causing higher ACI than in Figure 7A. It is assumed here that the ACI measured for the scenario of Figure 7B exceeds the predetermined threshold. In such case, the UE 120 may switch to using two (or more) receive chains. This enables the UE 120 to receive the irregular bandwidth with two different RX chains, each covering a regular bandwidth 702A and 702B marked with bi-directional arrows in Figure 7C. For example, if the assigned bandwidth is 7 MHz, the UE may use two overlapping 5 MHz bands 702A, 702B to receive the irregular 7 MHz band. This avoids or minimizes ACI, which may enable more reliable reception.

The irregular bandwidth may be configured by the network as two (or more) component carriers. This is shown in Figure 8. In Figure 8A, similar to Figure 7A, the measured ACI from the adjacent channel (marked with left likening diagonal lines) is low. In this case, it may be assumed that the determined ACI is smaller than the threshold, and the UE 120 may continue using the first receiver configuration of only one Rx chain for the reception of the channel assignment. This is because the ACI does not interfere too much on the UE's reception. However, in Figures 8B and 8C, it is depicted that if the ACI is too large for reception of the channel assignment with only one Rx chain, the UE 120 may need to use two RX chains for reception of the channel assignment, so that the component carriers (marked with dotted blocks) can be received with separate receiver chains and separate regular bandwidths 802A and 802B. This avoids or minimizes ACI, which may enable more reliable reception.

Further, in Figures 9A-9C, the UE 120 has been assigned two non-contiguous intra-band component carriers marked with dotted blocks. The UE 120 may initially try to receive the two non-contiguous intra-band component carriers (forming irregular bandwidth) by potentially using a next wider regular bandwidth. If the ACI from the adjacent channel (marked with left likening diagonal lines) is low, the UE may continue reception as shown in Figure 9A. However, if the ACI from the adjacent channel is higher than the predetermined threshold, then the UE 120 may switch to the second receiver configuration and use two RX chains so that the component carriers can be received with separate receiver chains and separate regular bandwidths 902A and 902B. This avoids or minimizes ACI, which may enable more reliable reception.

When the UE 120 needs to fallback to using the second receiver configuration of two or more Rx chains, as in step 606 of Figure 6, the UE 120 further in step 608 transmits to the network a message indicating a capability update of the UE 120 with respect to at least one of frequency bands or frequency band combinations. The capability may thus be updated compared to the capability of the UE as indicated earlier to the network or as known by the network previously.

This update of capabilities may be because the UE 120 using two or more receive chains to receive one channel assignment may have suffered from a reduction in UE's capabilities to perform carrier aggregation compared to a case where the channel assignment is received with only one Rx chain. For example, using two chains for irregular BW, may potentially block certain carrier aggregation combination, such as a CA combining channels n8 and n20. Nevertheless, to help with ACI filtration, irregular channel BW arriving at two different receive chains maybe beneficial in order to do partial down-conversion of the channel BW to match existing lowpass filters in the ABB (e.g. 2 x 5MHz for a 7MHz irregular channel BW).

In an embodiment, as shown in Figure 10, the UE 120 may, e.g. at network registration, provide in step 1000 to the network an indication of capabilities of the UE 120 with respect to at least one of frequency bands or frequency band combinations. For example, the UE may indicate frequency bands and/or frequency band combinations are supported by the UE 120. This capability indication may correspond to what has been explained in connection of Figure 2, for example. This way the network is aware which channels the UE can combine for carrier aggregation. As the capabilities with respect to carrier aggregation may have changed when using the second receiver configuration, the UE 120 may need to transmit an update of the UE capabilities in step 608 of Figures 6 and 10.

In an embodiment, the UE may inform that it is no longer capable of receiving a component carrier or a channel on a certain band due to that receiver chain being already used in the second receiver configuration. Then, the network (e.g. the base station 110) may refrain from allocating carrier aggregation combinations which include a carrier on the indicated band. That is, the capability update message may indicate reduced capability of the UE with respect to at least one of supported frequency bands or frequency band combinations. In an embodiment, the capability update message comprises an indication of at least one frequency band that is affected by the updated capabilities.

In an embodiment, the capability update message comprises an indication of the cause of transmitting the updated capabilities. The cause may be at least one of: irregular bandwidth, non-continuous intra-band carrier aggregation, or the ACI meets the predetermined criterion if using the first receive configuration to receive the channel assignment.

In an embodiment, the capability update is temporal. In an embodiment, the updated capabilities are valid only for a predetermined time period, after which the network may assume that the UE 120 is no longer suffering from the capability restriction indicated in the capability update message.

In an embodiment, the UE 120 may determine that the ACI does not anymore meet the predetermined criterion with respect to the ACI threshold. This may be e.g. due to reduced communication on the adjacent channel. The UE 120 may constantly or at intervals measure the ACI and in that way determine if the ACI situation has changed. For example, the situation may change from Figure 7B to Figure 7A. Based on the ACI not meeting the criterion/condition anymore, the UE 120 may switch back to applying the first receiver configuration. The UE 120 may also transmit to the network a second message indicating a capability update of the apparatus with respect to at least one of frequency bands or frequency band combinations. This capability update may indicate that the carrier aggregation capabilities of the UE 120 have improved.

It is noted that it may be that when the UE 120 receives the channel assignment in step 600 of Figure 6 and measures the ACI in step 604, the ACI may be low and the UE may at that point continue using the first receiver configuration, as in step 610. However, as the time proceeds, the ACI may change to be higher than the predetermined threshold, in which case the UE 120 may start using the second receiver configuration (step 606) and the capability update message referred to in step 608 may be sent.

In an embodiment including non-continuous intra-band CA, the UE may start using one RX chain and move to two RX chains when the ACI exceeds the threshold. In an embodiment including irregular continuous bandwidth, the UE 120 may start applying two RX chains and move to one RX chain when the ACI drops below the threshold.

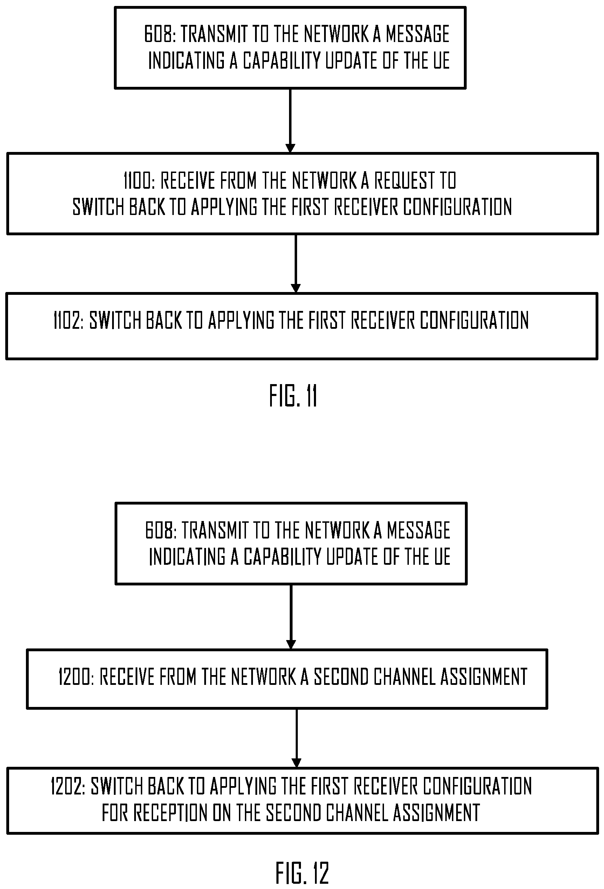

In an embodiment, shown in Figure 11, the UE 120 receives in step 1100 from the network a request to switch back to applying the first receiver configuration for reception on the first channel assignment. This provides the network an option to overrule UE's decision to use the second receiver configuration for the reception. Then, in step 1102 the UE 120 switches back to applying the first receiver configuration. This may cause unwanted ACI on the reception at the UE side, but the network may want to keep the carrier aggregation capabilities of the UE better.

In Figure 12 an embodiment is shown where the UE 120, receives in step 1200 from the network a second channel assignment. In step 1202, the UE 120 then switch back to applying the first receiver configuration for reception on the second channel assignment. This allows the network an option to improve the situation by re-allocating the UE to another channel assignment, which may or may not require use of the second receiver configuration. For example, let us say the UE has three CA capabilities, and that the UE is configured with a primary regular carrier and a secondary irregular carrier. Based on such assignment assuming the ACI is intolerable, the UE 120 reports to the network in the capability update message that the UE will use two receive chains, thus reducing CA capability by one. This indicates to the network that the configuration of the irregular bandwidth to the UE was not optimal and causes problems to the UE in this particular configuration and/or position. Therefore, if the network wishes to utilize more bandwidth, the network may to first optimize the use of the UE's resources by removing the irregular BW and then adding another, perhaps regular, BW to the UE 120. In other words, if the configuration is changed to no longer hold an irregular bandwidth combination, the limitations can be removed. In an embodiment, this can be implicit after the UE 120 has acknowledged the new reconfiguration, or explicit in the RRC reconfiguration complete.

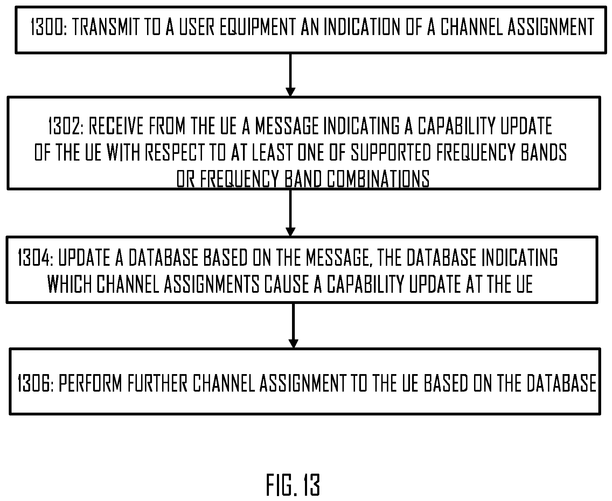

Figure 13 shows an embodiment of a method, which may be performed by a network element such as the base station 110. The method may be computer-implemented. In step 1300 the base station 110 transmits to a UE (such as to the UE 120) an indication of a channel assignment. As explained the channel assignment may indicate irregular bandwidth and/or non-contiguous intra-band carrier aggregation. In step 1302, the base station 110 may receive from the UE 120 a message indicating a capability update of the UE, as explained above in connection of step 608.

The base station 110 may in step 1304 update or build a database based on the received message. The database may indicate which channel assignments cause a capability update at the UE 120. The database may be UE specific or UE group specific. In an embodiment, the database is band, bandgroup or CA combination specific. The base station 110 may in step 1306 perform further channel assignment to the UE 120 based on the database. For example, if assignment of 7 MHz bandwidth causes capability reduction, the base station 110 may update this information in the database, so as to refrain from assigning this type of channel to the UE 120. That is, the network can choose to use the indications/feedback about usage of HW resources in future allocation of resources or can chose not to. In one further example, the base station 110 adapts carrier allocations to not conflict with the extended resources used by the UE. As yet one example, the network may move allocations to a place where the device does not need to use extended resources. This may be possible as the allocations which may need extended resources (i.e. use of the second receiver configuration) are stored in the database. The base station 110 may keep an allowed CA combination list and reduce the number of allowable combinations based on the feedback from the UE (e.g. based on the capability update message(s)).

The embodiment of Figure 13 may be beneficial as the network typically is only informed of the UEs CA capabilities during capability exchange and there is no information on how the UE 120 may support various aspects of CA and irregular bandwidth within this capability exchange. This may force the UE to commit to configurations upon registration that later may not be possible to honour, since the network has pushed the UE into using the second receiver configuration. If the UE had unlimited resources in the receive chains, then using two or more receiver chains would be of no problem, but since the Rx chains are expensive pieces of the UE 120, the UE 120 typically does not have too many Rx chains but needs to use the limited number of Rx chains efficiently.

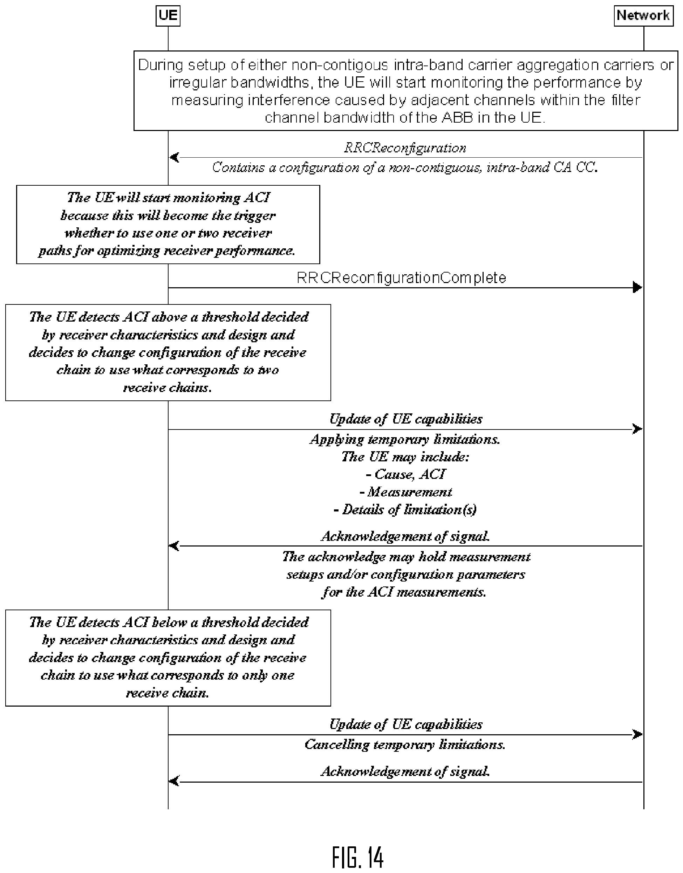

Figure 14 shows one non-limiting example implementation of the proposed solution. In the signaling flow diagram of Figure 14, a network (such as the base station 110) configures the UE (such as the UE 120) to monitor performance of reception by measuring interference caused by ACI within the filter channel bandwidth of the receiver chain (e.g. of the ABB) in the UE. The network may then configure the UE with irregular bandwidth and/or CA. This configuration may be done within the UE's reported capabilities with respect to supported bands and/or band combinations. The UE may send RRC reconfiguration complete message to the network.

The UE may measure ACI by using the first receiver configuration. Assuming the criterion with respect to ACI is met, the UE may choose to use the second receiver configuration, which may limit the UE's capabilities at least temporarily. This may be then signalled to the network as the message indicating update of UE capabilities. The message may be e.g. RRC message or a dedicated capability update message. Based on reception of the message, the network may update UE capabilities. If the network accepts the use of the second receive configuration (i.e. the reduction in the UE's CA capabilities), the network may send ACK to the UE. This ACK message may comprise e.g. measurement setup and/or configuration parameters for the ACI measurement.

The UE may continue measuring ACI for a situation where the reception is done by using the first receiver configuration. This may take place e.g. by using the two or more receive chains (as in 2^{nd} receiver configuration) and widen the filter of one of the chains (or more than one chain) to measure the ACI. Assuming the criterion with respect to ACI is no longer met, the UE may choose to use the first receiver configuration, which may lift the UE's capability reduction. This may be then signalled to the network as the second message indicating another update of UE capabilities, or as a message cancelling the previously informed temporal capability limitations. The message may be e.g. RRC message or a dedicated capability update message. Based on reception of the message, the network may update UE capabilities. If the network accepts the use of the first receiver configuration (i.e. that the reduction in the UE's CA capabilities if lifted), the network may send ACK to the UE.

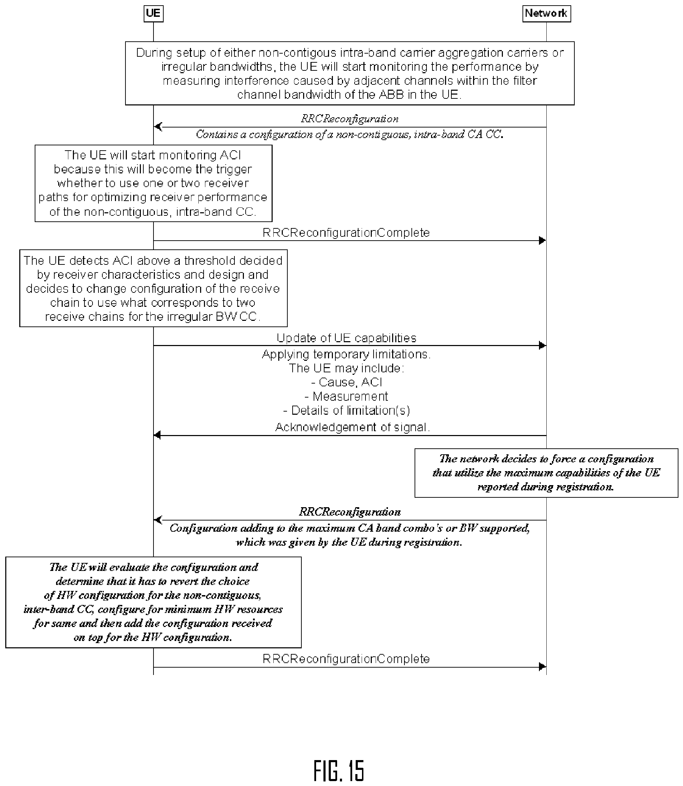

In some embodiments, the network may decide to overrule the limitations of the UE. To accomplish that, the network may for example, reconfigure the UE 120 away from the problematic irregular BW or a non-contiguous intra-band CA. As another option for the network to overrule the UE's reduction in CA combinations, the network may reconfigure the UE 120 with a configuration that forces the UE 120 to use minimum number of resources for each component carrier (CC) of the CA, thereby forcing the maximum capabilities of the UE 120. This forces the UE 120 to first reconfigure the existing CC for irregular BW/non-contiguous intra-band and then execute the new configuration on top. This is shown in Figure 15. For example, assume the UE has capabilities to use maximum two CCs on band 8. The UE receives a configuration/channel assignment to use irregular or non-contiguous CC on band 8. However, ACI causes the UE to use two receive chains for improved performance in this channel assignment. Then, when the network is informed of reduced capabilities, the network chooses to configure another CC on band 8. This new channel assignment overrules the temporary limitation, and the UE reverts to use one receive chain and then applies the last configured CC on band 8.

The upper part of the signaling flow diagram of Figure 15 is the same as in Figure 14. However, after receiving the message of the capability update, the network may decide to force the UE 120 to a configuration that utilizes maximum capabilities of the UE. The network may first send ACK and then decide to reconfigure the UE, or the network can, instead of ACK, send NACK right away after receiving the capability update message. In one embodiment, the ACK/NACK message is not sent, but the RRC reconfiguration message from network to UE serves the purpose of ACK/NACK. Based on receiving such reconfiguration message, the UE may determine that it needs to revert the choice of the receiver configuration back to using the first receiver configuration.

As shown in Figure 15, for example, the limitation of capabilities can also be because of configurations received in RRC reconfiguration messages, not only in RRC setup messages. Consequently, the communication of potential limited resources is possible in both an RRC setup complete and an RRC reconfiguration complete messages. Even though the signalling illustrated in some of the Figures is done by RRC signaling, e.g. for the exchange of limitations, but the messages can also be exchanged as MAC control elements, or by any other communication means.

In an embodiment, the UE, without measuring ACI, switches to using the second receiver configuration, and sends the capability update message to the network.

In an embodiment, there is a single bandgroup that shares Rx chains. In this case, the reduction in the UE's CA combinations affect the single bandgroup, which may be indicated in the capability update message. In another embodiment, there may be shared Rx chains (e.g. shared ABBs) between many bandgroups (e.g. low-band group, mid-band group, high-band group).

Some advantages of the solutions presented above include introducing simple and manageable approach for the UE and the network to exchange band combination reconfiguration, allow the UE to make use of downlink based on ACI inputs for irregular bandwidth configurations and/or non-contiguous intra-band carrier aggregation configurations, avoiding updating the entire band combination list on the UE and grant the UE with opportunities to transfer the updated supported configurations to the network based on ACI inputs. It is also noted that the network may evaluate if the reported events from the UE should be regarded in the evaluation to remove a certain band combination. The solutions may enable the network and the UE to exchange information of the ACI when the ACI is determined to impact the UE, which may be important when an irregular channel bandwidth is configured by the network to serve one UE. It may be noted that the cause of the update message indicated to the network may enable the network to establish the best action for future reconfigurations, i.e. whether to overrule capability limitations or not, whether to reconfigure away from the usage of irregular BW/non-contiguous intra-band CA due to channel conditions, etc.

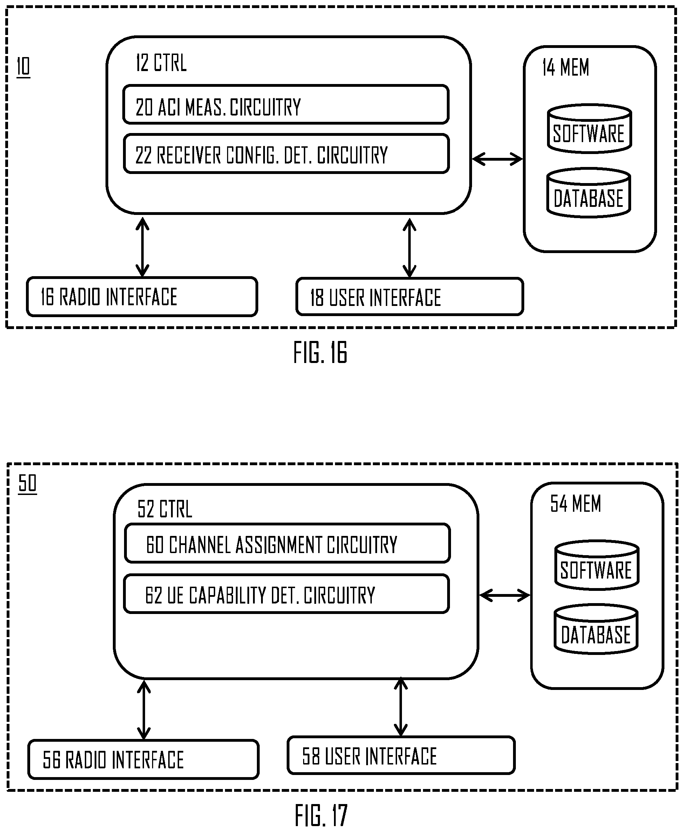

An embodiment, as shown in Figure 16, provides an apparatus 10 comprising a control circuitry (CTRL) 12, such as at least one processor, and at least one memory 14 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120. The apparatus may be caused to execute some of the functionalities of the above described processes, such as the steps of Figure 6.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise an ACI measurement circuitry 20 for measuring ACI, according to any of the embodiments. The control circuitry 12 may further comprise a receiver configuration determination/selection circuity 22 for selecting which receiver configuration to use, according to any of the embodiments.

An embodiment, as shown in Figure 17, provides an apparatus 50 comprising a control circuitry (CTRL) 52, such as at least one processor, and at least one memory 54 storing instructions that, when executed by the at least one processor, cause the apparatus at least to carry out any one of the above-described processes. In an example, the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may be or be comprised in a network node, such as in gNB/gNB-CU/gNB-DU of 5G. In an embodiment, the apparatus is or is comprised in the network node 110. The apparatus may be caused to execute some of the functionalities of the above described processes, such as the steps of Figure 13.

In an embodiment, a CU-DU (central unit - distributed unit) architecture is implemented. In such case the apparatus 50 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be standalone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit. In an embodiment, the execution of at least some of the functionalities of the apparatus 50 may be shared between two physically separate devices (DU and CU) forming one operational entity. Therefore, the apparatus may be seen to depict the operational entity comprising one or more physically separate devices for executing at least some of the described processes. In an embodiment, the apparatus controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to access the radio access network, for example. The apparatus may also comprise a user interface 58 comprising, for example, at least one keypad, a microphone, a touch display, a display, a speaker, etc. The user interface may be used to control the apparatus by the user.

The control circuitry 52 may comprise a channel assignment circuitry 60 for determining which channel/resources are to be allocated to the UE, according to any of the embodiments. The control circuitry 52 may comprise an UE capability determination circuity 62 e.g. for controlling maintenance of up-to-date information regarding UE's capabilities, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying soft-ware and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface soft-ware, display software, circuit, antenna, antenna circuitry, and circuitry.

A term non-transitory, as used herein, is a limitation of the medium itself (i.e. tangible, not a signal) as opposed to a limitation on data storage persistency (e.g. RAM vs. ROM).

As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Following is a list of some aspects of the invention.

According to a first aspect, there is provided a method performed by an apparatus, such as a user equipment, the method comprising: receiving from a network an indication of a channel assignment; determining adjacent channel interference within a reception bandwidth when applying a first receiver configuration for reception on the channel assignment; determining whether the adjacent channel interference meets a predetermined criterion with respect to a predetermined threshold; based on determining that the adjacent channel interference meets the predetermined criterion, switching from applying the first receiver configuration to applying a second receiver configuration for reception on the channel assignment, and transmitting to the network a message indicating a capability update of the apparatus with respect to at least one of frequency bands or frequency band combinations; or based on determining that the adjacent channel interference does not meet the predetermined criterion, continue applying the first receiver configuration for reception on the channel assignment.

Various embodiments of the first aspect may comprise at least one feature from the following bulleted list:
- providing to the network an indication of capabilities of the apparatus with respect to at least one of frequency bands or frequency band combinations.
- wherein the channel assignment comprises an irregular bandwidth allocation, wherein an irregular bandwidth is a bandwidth having a different width than any of a predetermined set of bandwidths supported by the apparatus.

- wherein the channel assignment comprises a configuration of a non-continuous intra-band carrier aggregation.
- the updated capabilities indicate reduced capability of the apparatus with respect to at least one of frequency bands or frequency band combinations.
- wherein the message comprises an indication of the cause of transmitting the updated capabilities.
- wherein the cause indicates at least one of irregular bandwidth or non-continuous intra-band carrier aggregation.
- wherein the cause indicates that the adjacent channel interference meets the predetermined criterion if using the first receive configuration for the reception on the channel assignment.
- wherein the message comprises an indication of at least one frequency band that is affected by the updated capabilities.
- wherein the first receiver configuration comprises applying one receiver chain for the reception on the channel assignment.
- wherein the second receiver configuration comprises applying at least two receiver chains for the reception on the channel assignment.
- determining that the adjacent channel interference does not anymore meet the predetermined criterion; based on the determination, switching back to applying the first receiver configuration; and transmitting to the network a second message indicating a capability update of the apparatus with respect to at least one of frequency bands or frequency band combinations.
- receiving from the network, after sending the message, a request to switch back to applying the first receiver configuration; and switching back to applying the first receiver configuration.
- receiving from the network a second channel assignment; and switching back to applying the first receiver configuration for reception on the second channel assignment.

According to a second aspect, there is provided a method performed by an apparatus, such as a base station, the method, comprising: transmitting to a user equipment an indication of a channel assignment; receiving from the user equipment a message indicating a capability update of the user equipment with respect to at least one of frequency bands or frequency band combinations; updating a database based on the message, the database indicating which channel assignments cause a capability update at the user equipment; and performing further channel assignment to the user equipment based on the database.

According to a third aspect, there is provided an apparatus, comprising: at least one processor; and at least one memory storing instructions that, when executed by the at least one processor, cause the apparatus at least to receive from a network an indication of a channel assignment; determine adjacent channel interference within a reception bandwidth when applying a first receiver configuration for reception on the channel assignment; determine whether the adjacent channel interference meets a predetermined criterion with respect to a predetermined threshold; based on determining that the adjacent channel interference meets the predetermined criterion, switch from applying the first receiver configuration to applying a second receiver configuration for reception on the channel assignment, and transmit to the network a message indicating a capability update of the apparatus with respect to at least one of frequency bands or frequency band combinations; or based on determining that the adjacent channel interference does not meet the predetermined criterion, continue to apply the first receiver configuration for reception on the channel assignment.

Various embodiments of the third aspect may comprise at least one feature from the bulleted list under the first aspect.

According to a fourth aspect, there is provided an apparatus, comprising: at least one processor; and at least one memory storing instructions that, when executed by the at least one processor, cause the apparatus at least to: transmit to a user equipment an indication of a channel assignment; receive from the user equipment a message indicating a capability update of the user equipment with respect to at least one of frequency bands or frequency band combinations; update a database based on the message, the database indicating which channel assignments cause a capability update at the user equipment; and perform further channel assignment to the user equipment based on the database.

According to a fifth aspect, there is provided a computer program product embodied on a distribution medium readable by a computer and comprising program instructions which, when loaded into an apparatus, execute the method according to the first aspect.

According to a sixth aspect, there is provided a computer program product embodied on a distribution medium readable by a computer and comprising program instructions which, when loaded into an apparatus, execute the method according to the second aspect.

According to a seventh aspect, there is provided a computer program product comprising program instructions which, when loaded into an apparatus, execute the method according to the first aspect.

According to an eight aspect, there is provided a computer program product comprising program instructions which, when loaded into an apparatus, execute the method according to the second aspect.

According to a ninth aspect, there is provided an apparatus, comprising means for performing the method according to the first aspect, and/or means configured to cause the apparatus to perform the method according to the first aspect.

According to a tenth aspect, there is provided an apparatus, comprising means for performing the method according to the second aspect, and/or means configured to cause the apparatus to perform the method according to the second aspect.

According to an eleventh aspect, there is provided computer implemented system, comprising: a server and at least one radio node; and at least one processor and at least one memory storing instructions that, when executed by the at least one processor, cause the system at least to carry out the method according to the first aspect and/or the method according to the second aspect.

According to a twelfth aspect, there is provided computer implemented system, comprising: one or more processors; at least one data storage, and one or more computer program instructions to be executed by the one or more processors in association with the at least one data storage for carrying out the method according to the first aspect and/or the method according to the second aspect.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus, comprising means for:
receiving from a network an indication of a channel assignment;
determining adjacent channel interference within a reception bandwidth when applying a first receiver configuration for reception on the channel assignment;
determining whether the adjacent channel interference meets a predetermined criterion with respect to a predetermined threshold;
based on determining that the adjacent channel interference meets the predetermined criterion, switching from applying the first receiver configuration to applying a second receiver configuration for reception on the channel assignment, and transmitting to the network a message indicating a capability update of the apparatus with respect to at least one of frequency bands or frequency band combinations; or
based on determining that the adjacent channel interference does not meet the predetermined criterion, continuing to apply the first receiver configuration for reception on the channel assignment.

2. The apparatus of claim 1, wherein the means are further configured for: providing to the network an indication of capabilities of the apparatus with respect to at least one of frequency bands or frequency band combinations.

3. The apparatus of any of claims 1 to 2, wherein the channel assignment comprises at least one of: an irregular bandwidth allocation, wherein an irregular bandwidth is a bandwidth having a different width than any of a predetermined set of bandwidths supported by the apparatus, or a configuration of a non-continuous intra-band carrier aggregation.

4. The apparatus of any of claims 1 to 3, wherein the capability update indicates reduced capability of the apparatus with respect to at least one of frequency bands or frequency band combinations.

5. The apparatus of any of claims 1 to 4, wherein the message comprises an indication of the cause of transmitting the capability update.

6. The apparatus of claim 5, wherein the cause indicates at least one of irregular bandwidth or non-continuous intra-band carrier aggregation.

7. The apparatus of any of claims 5 to 6, wherein the cause indicates that the adjacent channel interference meets the predetermined criterion if using the first receive configuration for the reception on the channel assignment.

8. The apparatus of any of claims 1 to 7, wherein the message comprises an indication of at least one frequency band that is affected by the capability update.

9. The apparatus of any of claims 1 to 8, wherein the first receiver configuration comprises applying one receiver chain for the reception on the channel assignment, and wherein the second receiver configuration comprises applying at least two receiver chains for the reception on the channel assignment.

10. The apparatus of any of claims 1 to 9, wherein the apparatus is further caused to:
determine that the adjacent channel interference does not anymore meet the predetermined criterion;
based on the determination, switch back to applying the first receiver configuration; and
transmit to the network a second message indicating a capability update of the apparatus with respect to at least one of frequency bands or frequency band combinations.

11. The apparatus of any of claims 1 to 9, wherein the apparatus is further caused to:
receive from the network, after sending the message, a request to switch back to applying the first receiver configuration; and
switch back to applying the first receiver configuration.

12. The apparatus of any of claims 1 to 9, wherein the apparatus is further caused to:
receive from the network a second channel assignment; and
switch back to applying the first receiver configuration for reception on the second channel assignment.

13. An apparatus, comprising means for:
transmitting to a user equipment an indication of a channel assignment;
receiving from the user equipment a message indicating a capability update of the user equipment with respect to at least one of frequency bands or frequency band combinations;
updating a database based on the message, the database indicating which channel assignments cause a capability update at the user equipment; and
performing further channel assignment to the user equipment based on the database.

14. A method performed by a user equipment, the method comprising:
receiving from a network an indication of a channel assignment;
determining adjacent channel interference within a reception bandwidth when applying a first receiver configuration for reception on the channel assignment;
determining whether the adjacent channel interference meets a predetermined criterion with respect to a predetermined threshold;
based on determining that the adjacent channel interference meets the predetermined criterion, switching from applying the first receiver configuration to applying a second receiver configuration for reception on the channel assignment, and transmitting to the network a message indicating a capability update of the user equipment with respect to at least one of frequency bands or frequency band combinations; or
based on determining that the adjacent channel interference does not meet the predetermined criterion, continue applying the first receiver configuration for reception on the channel assignment.

15. A method performed by a network node, the method comprising:
transmitting to a user equipment an indication of a channel assignment;
receiving from the user equipment a message indicating a capability update of the user equipment with respect to at least one of frequency bands or frequency band combinations;
updating a database based on the message, the database indicating which channel assignments cause a capability update at the user equipment; and
performing further channel assignment to the user equipment based on the database.
